# EUROPEAN PATENT APPLICATION

(11) **EP 4 418 475 A1**
(43) Date of publication of application: **21.08.2024**
(21) Application number: 22881123.8
(22) Date of filing: 14.10.2022
(51) Int. Cl.: H02G 1/14, B21F 1/02, H02G 1/12

(54) **MULTICORE CABLE PROCESSING DEVICE**

(30) Priority: 14.10.2021 JP 2021169027
(71) Applicant: ShinMaywa Industries, Ltd., Takarazuka-shi, Hyogo 665-8550 (JP)
(72) Inventor: TAKAHASHI Yoshiki, Takarazuka-shi, Hyogo 665-8550 (JP); SHIRAI Hiroaki, Takarazuka-shi, Hyogo 665-8550 (JP); FUJISAWA Naoki, Takarazuka-shi, Hyogo 665-8550 (JP); OKADA Morihiro, Takarazuka-shi, Hyogo 665-8550 (JP)
(74) Representative: Grünecker Patent- und Rechtsanwälte PartG mbB
(86) International application number: PCT/JP2022/038481
(87) International publication number: WO 2023/063428

(57) **Abstract**

A processing apparatus 200 for a multicore cable 1 processes the multicore cable 1 including a sheath 2 and cores 3 and 4 inserted in the sheath 2, and includes: a slitter 21 that makes a slit along a circumferential direction; a puller 22 that moves at least one of a distal portion of the sheath 2 and a proximal portion of the sheath 2 in a longitudinal direction of the multicore cable 1 to thereby expose the core wires 3 and 4, the distal portion being closer to a distal end of the multicore cable 1 than the slit, the proximal portion being closer to a proximal end of the multicore cable 1 than the slit; a detector 31 that detects a position of a specific core 3 of the cores 3 and 4 in a circumferential direction of the multicore cable 1; and a rotator 32a that rotates the multicore cable 1 based on the detected position of the specific core 3 in the circumferential direction to thereby move the specific core 3 to a predetermined position in the circumferential direction.

## Description

### TECHNICAL FIELD

The present invention relates to a multicore cable processing apparatus.

### BACKGROUND ART

A method for insulating a drain wire included in a multicore shielded cable has been proposed to date. Patent Document 1, for example, discloses a drain wire insulation method in which a sheath is removed to expose covered wires (core wires) and a drain wire, and then, the drain wire is bent by 90 degrees to be separated from the core wires and inserted in a heat shrinkable tube. In the method disclosed in Patent Document 1, the heat shrinkable tube is then shrunk by heat so that the drain wire is thereby insulated.

### CITATION LIST

### Patent Document

Patent Document 1: Japanese Patent Application Publication No. 2016-123215

### SUMMARY OF INVENTION

### Technical Problems

In the method disclosed in Patent Document 1, the process of bending the drain wire to separate the drain wire from the core wires and inserting the drain wire in the heat shrinkable tube is manually performed. As in this method, some processes on cores of a multicore cable are not automated, and a reason for this is that the position of each core of the multicore cable is not specified. This application proposes a multicore cable processing apparatus capable of specifying positions of a plurality of cores of a multicore cable to ease a process on the cores of the multicore cable.

### Solution to Problem

A multicore cable processing apparatus according to the present invention processes a multicore cable including a sheath and a plurality of core wires inserted in the sheath, and includes: a slitter that makes a slit in the sheath along a circumferential direction; a puller that moves at least one of a distal portion of the sheath and a proximal portion of the sheath in a longitudinal direction of the multicore cable to thereby expose the cores, the distal portion of the sheath being closer to a distal end of the multicore cable than the slit, the proximal portion of the sheath being closer to a proximal end of the multicore cable than the slit; a detector that detects a position of a specific core of the cores in a circumferential direction of the multicore cable; and a rotator that rotates the multicore cable based on the detected position of the specific core in the circumferential direction to thereby move the specific core to a predetermined position in the circumferential direction.

In the multicore cable processing apparatus, the multicore cable is rotated based on the position of the specific core in the circumferential direction detected by the detector, and the position of the specific core is used as the predetermined position in the circumferential direction. Accordingly, positions of the multiple cores in the multicore cable can be specified.

In a preferred aspect of the multicore cable processing apparatus according to the present invention, the cores include a drain wire and a plurality of core wires, and the specific core is the drain wire. The multicore cable processing apparatus further includes: a separator that forces at least one of the drain wire and the core wires to thereby separate the drain wire from the core wires, based on the detected position of the drain wire in the circumferential direction; an insulation processor that performs an insulation process on the separated drain wire; and a first conveyor that conveys the multicore cable to the slitter, the puller, the detector, the rotator, the separator, and the insulation processor.

In the multicore cable processing apparatus, in a case where the multicore cable is a multicore shielded cable including a drain wire, processing on the multicore shielded cable up to the insulation process of the drain wire can be automatically performed.

In a preferred aspect of the present invention, the multicore cable processing apparatus further includes a corrector that applies a tensile tension while twisting the separated drain wire in the circumferential direction to thereby correct the drain wire, before the insulation process.

In the multicore cable processing apparatus, since the drain wire is corrected, the insulation process of the drain wire can be easily performed.

In a preferred aspect of the multicore cable processing apparatus according to the present invention, the insulation processor includes an inserter that inserts the separated drain wire in a heat shrinkable tube, and a heater that heats the heat shrinkable tube in which the drain wire is inserted.

In the multicore cable processing apparatus, the insulation process is performed by inserting the drain wire in the heat shrinkable tube and shrinking the heat shrinkable tube. Accordingly, the insulation process by an automatic machine can be easily performed, as compared to another method such as a method of winding an insulating tape around the drain wire, for example.

In a preferred aspect of the multicore cable processing apparatus according to the present invention, the puller pulls out the distal portion of the sheath while rotating at least one of the distal portion of the sheath and the proximal portion of the sheath such that the distal portion of the sheath rotates with respect to the proximal portion of the sheath in the circumferential direction to thereby untwist the cores.

In the multicore cable processing apparatus, detection of the position of the specific core by the detector can be easily performed by untwisting the cores.

In a preferred aspect of the multicore cable processing apparatus according to the present invention, the puller performs semi-striping of pulling out the distal portion of the sheath such that a portion of the cores is exposed and the distal portion of the sheath remains on another portion of the cores, before the detector detects the specific core. The puller also performs full-stripping of separating the distal portion of the sheath from the cores after the detector detects the specific core.

In the multicore cable processing apparatus, difficulty in detecting the position of the specific core by the detector due to spreading-out of the cores can be avoided.

In a preferred aspect of the present invention, the multicore cable processing apparatus further includes an aligner that aligns the cores with predetermined intervals. The aligner includes an alignment member and a mover. The alignment member including a plurality of comb teeth, each adjacent two of the comb teeth forming one of a plurality of gaps corresponding to the cores. The mover moves at least one of the alignment member and the multicore cable and inserts the cores in the gaps of the alignment member individually. The gaps are separated from each other such that a distance between the gaps gradually increases toward a front in a movement direction in inserting the cores, the gaps being arranged with the predetermined intervals in a front end in the movement direction.

In the multicore cable processing apparatus, the cores are aligned with predetermined intervals, and the positions of the cores are specified. This eases processing on the cores in subsequent processes.

In a preferred aspect of the present invention, the multicore cable processing apparatus further includes: a plurality of holding members each capable of holding one of the cores; a stripper to which tip portions of the cores are loaded and which strips coatings on the loaded tip portions of the cores; and a loader that moves the holding members individually and loads the cores held by the holding members to the stripper individually.

The stripping of the cores of the multicore cable is preferably performed on the cores by one by in terms of quality control. In the multicore cable processing apparatus, the cores are loaded to the stripper one by one by the loader. Accordingly, sufficient quality in stripping of the cores can be obtained.

In a preferred aspect of the present invention, the multicore cable processing apparatus further includes a crimper to which the tip portions of the cores are loaded and which crimps terminals to the loaded tip portions of the cores. The loader moves the holding members individually and loads the cores which are held by the holding members and from which coatings on the tip portions are stripped to the crimper individually.

The crimping of the terminals to the cores is also preferably performed on the cores one by one in terms of quality control. Accordingly, the multicore cable processing apparatus can obtain sufficient quality in crimping of terminals to the cores.

In a preferred aspect of the multicore cable processing apparatus according to the present invention, the cores include a plurality of core wires. The multicore cable processing apparatus further includes a rubber plug attacher to which tip portions of the core wires are loaded and which attaches waterproof rubber plugs to the loaded core wires. The loader moves the holding members individually and loads the core wires held by the holding members to the rubber plug attacher individually, before coatings on the tip portions of the core wires are stripped.

The attachment of the waterproof rubber plugs to the core wires is also preferably performed on the core wires by one by in terms of quality control. Accordingly, the multicore cable processing apparatus can obtain sufficient quality in attachment of waterproof rubber to the core wires.

In a preferred aspect of the present invention, the multicore cable processing apparatus further includes a first processing station including at least one of the slitter, the puller, the detector, and the rotator; a second processing station located adjacent to the first processing station in a predetermined direction and including at least another of the slitter, the puller, the detector, and the rotator; and a first conveyor that conveys the multicore cable to the slitter, the puller, the detector, and the rotator. The first conveyor includes a holder that holds the multicore cable bent such that a first end and a second end of the multicore cable are arranged in the predetermined direction, and a holder mover that moves the holder in the predetermined direction. A device included in the second processing station processes the second end of the multicore cable while a device included in the first processing station processes the first end of the multicore cable.

The multicore cable processing apparatus can process the first and second ends of the multicore cable at the same time. Accordingly, the cycle time of processing of the multicore cable can be shortened.

In a preferred aspect of the present invention, the multicore cable processing apparatus further includes: a first conveyor that conveys the multicore cable to the slitter, the puller, the detector, and the rotator; a stripper to which tip portions of the cores are loaded and which strips coatings on the tip portions of the loaded cores; a crimper to which the tip portions of the cores are loaded and which crimps terminals to the tip portions of the cores from which the coatings are stripped by the stripper; and a second conveyor that conveys the multicore cable to the stripper and the crimper. The second conveyor includes a carrier including a plurality of holding members each capable of holding one of the cores, and a carrier mover that moves the carrier. The carrier mover moves the carrier among an intake position at which the multicore cable is taken, a first facing position facing the stripper, a second facing position facing the crimper. and a release position at which the multicore cable to which the terminal is crimped is released.

The multicore cable processing apparatus can convey the multicore cable without switching holding of the cores during stripping of the cores or the crimping of the terminals. Accordingly, a change of positions of the cores due to switching of holding is avoided, and the positions of the cores are stabilized. As a result, stripping of the cores and crimping of the terminals can be performed with high quality.

In a preferred aspect of the multicore cable processing apparatus according to the present invention, the second conveyor includes a plurality of the carriers. The carrier mover performs cyclic movement of the carriers.

In the multicore cable processing apparatus, since the carriers can be returned from the release position to the intake position, the multicore cable can be continuously conveyed. In addition, since the plurality of carriers circulate, productivity can be enhanced.

In a preferred aspect of the multicore cable processing apparatus according to the present invention, the cyclic movement of the carriers includes lateral movement among the intake position, the first facing position, and the second facing position, and vertical movement among a vertical position where the intake position, the first facing position, and the second facing position belong to and another vertical position below the intake position, the first facing position, and the second facing position. The holding members of the carriers hold the cores when the carriers move from a position below the intake position to the intake position.

In the multicore cable processing apparatus, the cores are held by utilizing vertical movement in cyclic movement of the carriers, and thus, the process time can be shortened.

In a preferred aspect of the present invention, the multicore cable processing apparatus further includes a plurality of processing stations each including at least one of the slitter, the puller, the detector, and the rotator. The first conveyor includes a plurality of fixing holders each facing one of the processing stations and operable to hold the multicore cable, and one or more moving holders each operable to hold the multicore cable and to reciprocate between adjacent two of the fixing holders.

In the multicore cable processing apparatus, the first conveyor conveys the multicore cable to the slitter, the puller, the detector, and the rotator that do not require precise positioning for conveyance of the multicore shielded cable. Since the first conveyor switches holding of the multicore cable between the moving holder and the fixing holder, the positioning accuracy of the cores is less likely to be high, but the configuration is simple. On the other hand, the second conveyor that does not switch holding of the multicore cable conveys the multicore cable to the stripper and the crimper that require positioning accuracy of the cores. Thus, the multicore cable processing apparatus can enhance processing quality of the multicore cable with simplification as the entire processing apparatus.

In a preferred aspect of the present invention, the multicore cable processing apparatus further includes a transfer that receives the multicore cable from the first conveyor and delivers the multicore cable to the second conveyor.

In the multicore cable processing apparatus, direct transfer of the multicore cable from the first conveyor to the second conveyor is eliminated, and thus, waiting times of the first conveyor and the second conveyor can be reduced. Accordingly, the multicore cable can be smoothly transferred from the first conveyor to the second conveyor.

In a preferred aspect of the multicore cable processing apparatus according to the present invention, the processing stations are arranged in a conveyance direction of conveyance of the multicore cable by the moving holders. The multicore cable processing apparatus further includes a bender located upstream of the processing stations in the conveyance direction and operable to bend the multicore cable in a substantially U shape such that both ends of the multicore cable are arranged in the conveyance direction. Each of the fixing holders holds one end of the multicore cable bent by the bender. While a device included in a first processing station of the processing stations processes an upstream end portion of the multicore cable, a device included in a second processing station of the processing stations processes a downstream end portion of the bent multicore cable, the first processing station being adjacent to an upstream side of the second processing station.

The multicore cable processing apparatus can process the upstream and downstream ends of the multicore cable at the same time. Accordingly, the cycle time of processing of the multicore cable can be shortened.

In a preferred aspect of the multicore cable processing apparatus according to the present invention, the holding members of the carrier include an upstream group operable to hold the cores exposed in the upstream end portion of the bent multicore cable, and a downstream group located downstream of the upstream group in the conveyance direction and operable to hold the cores exposed in the downstream end portion of the bent multicore cable.

In the multicore cable processing apparatus, the second conveyor can also hold both ends of the substantially U-bent multicore cable.

In a preferred aspect of the multicore cable processing apparatus according to the present invention, the holding members hold the multicore cable such that a distance between both ends of the multicore cable is narrower than a distance between both ends of the multicore cable in a state of being held by the fixing holders.

In the multicore cable processing apparatus, the processing station where the first conveyor conveys the multicore cable has flexibility in arrangement of the device, and in the second conveyor, the distance between both ends of the multicore cable is narrow so that the length of the processing apparatus in the conveyance direction can be thereby shortened.

In a preferred aspect of the present invention, the multicore cable processing apparatus further includes a transfer that receives the multicore cable from the first conveyor and delivers the multicore cable to the second conveyor. The transfer includes a pair of holding members operable to individually hold both ends of the multicore cable, and a driver. The driver moves the pair of holding members toward or away from each other, and causes a distance between the pair of holding members to conform to either a distance between both ends of the multicore cable when being held by the first conveyor or a distance between both ends of the multicore cable when being held by the second conveyor.

In the multicore cable processing apparatus, the transfer that transfers the multicore cable from the first conveyor to the second conveyor can reduce the distance between both ends of the multicore cable. Accordingly, the device for reducing the distance between both ends of the multicore cable and the transfer can be designed as one device.

### Advantages of Invention

A multicore cable processing apparatus according to the present invention can specify positions of a plurality of cores of a multicore cable.

### BRIEF DESCRIPTION OF THE DRAWINGS

FIG. 1 is a schematic cross-sectional view of a multicore shielded cable.
FIG. 2 is a schematic plan view of a processing apparatus of a multicore shielded cable according to one preferred embodiment.
FIG. 3 is a block diagram of the processing apparatus of the multicore shielded cable.
FIG. 4 is a schematic side view of a second station.
FIG. 5 is a schematic plan view of a third station.
FIG. 6 is a schematic front view of the third station and illustrates a state where core wires are separated.
FIG. 7 is a schematic side view of a fourth station.
FIG. 8 is a schematic side view of a fifth station.
FIG. 9 is a schematic plan view of a sixth station.
FIG. 10 is a schematic front view of the sixth station and illustrates a state where a drain wire and core wires are aligned.
FIG. 11 is a schematic plan view of a seventh station.
FIG. 12 is a schematic plan view of an eighth station.
FIG. 13 is a schematic plan view of a ninth station.
FIG. 14 is a rear view of a conveyor of a multicore shielded cable.
FIG. 15 is a rear view of a conveyor of a multicore shielded cable according to another preferred embodiment.

### DESCRIPTION OF PREFERRED EMBODIMENTS

### [Outline of Processing Device]

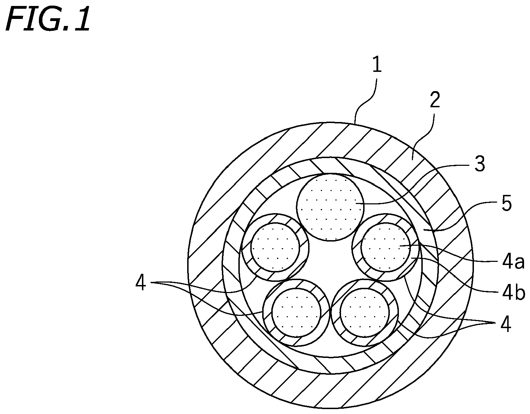

A preferred embodiment of the present invention will be described hereinafter with reference to the drawings. First, a multicore cable to be subjected to wire processing, which is herein a multicore shielded cable 1 including a shield, will be described with reference to FIG. 1. FIG. 1 is a schematic cross-sectional view of a multicore shielded cable 1 according to one example. As illustrated in FIG. 1, the multicore shielded cable 1 includes a sheath 2, a drain wire 3 and a plurality of core wires 4 inserted in the sheath 2, and a shield 5. The multicore shielded cable 1 is an electric wire in which the drain wire 3, the core wires 4, and the shield 5 are covered with the sheath 2. The core wires 4 are used as signal wires for transmitting electrical signals, for example. Each of the core wires 4 includes a core 4a and a coating 4b of an insulator covering the core 4a. The shield 5 is a conductor that shields the core wires 4 from external noise. The shield 5 covers the outer side of the core wires 4. The drain wire 3 is electrically connected to the shield 5. The drain wire 3 is grounded so that the shield 5 is thereby grounded. The drain wire 3 is made of a plurality of thin conductor strands, and is not covered with an insulator. Although not shown, the drain wire 3 and the core wires 4 are twisted together inside the shield 5. The shield 5 is covered with the sheath 2 of an insulator. The number of the core wires 4 is not particularly limited. In the following description, when the drain wire 3 is not particularly distinguished from the core wires 4, these wires can be collectively referred to as "cores" in some cases.

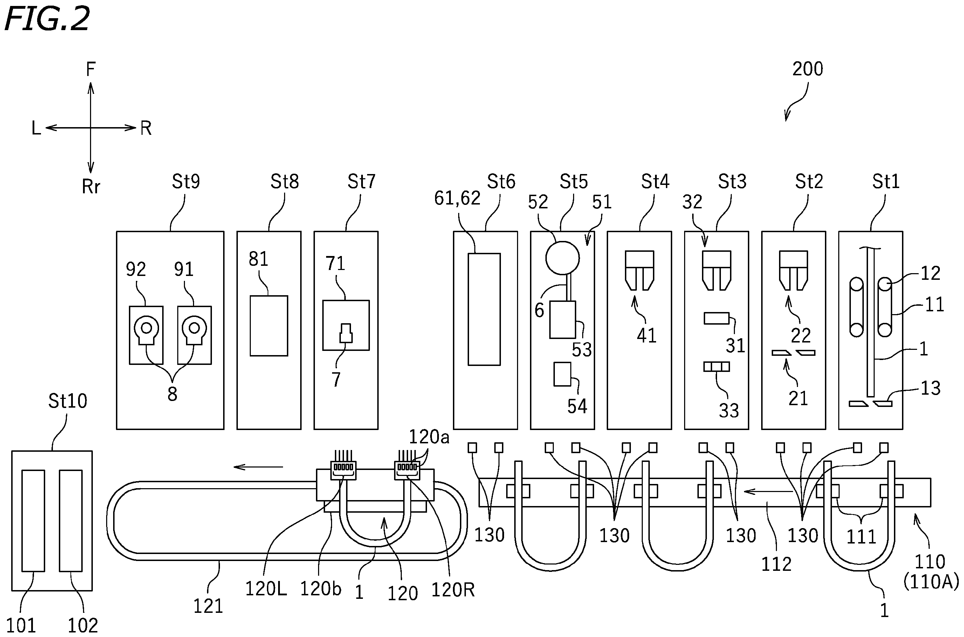

FIG. 2 is a schematic plan view of a processing apparatus 200 of a multicore shielded cable 1 according to one preferred embodiment (hereinafter referred to simply as a processing apparatus). The processing apparatus 200 performs an insulation process on the drain wire 3 and crimps a terminal 8 to the front end of the drain wire 3 and also crimps terminals 8 to front ends of the core wires 4. In the insulation process on the drain wire 3 herein, the drain wire 3 is covered with a heat shrinkable tube 6, and the heat shrinkable tube 6 is shrunk by heat. In this preferred embodiment, waterproof rubber plugs 7 are also attached to the drain wire 3 and the core wires 4, but attachment of the rubber plugs 7 may be omitted depending on specifications of the multicore shielded cable 1.

As illustrated in FIG. 2, the processing apparatus 200 according to this preferred embodiment includes ten stations: a first station St1 through a tenth station St10. The multicore shielded cable 1 is conveyed among stations from the first station St1 toward the tenth station St10. The first station St1 through the ninth station St9 are arranged in a conveyance direction in which the multicore shielded cable 1 is conveyed (the left-right direction in FIG. 2 in this preferred embodiment). In the first station St1, the process of measuring the length of the multicore shielded cable 1 and cutting the multicore shielded cable 1 in a predetermined length. In the second station St2, the process of making a slit in the sheath 2 and pulling out a distal portion of the sheath 2 is performed. In this process, the sheath 2 is not pulled out until the sheath 2 is separated from the multicore shielded cable 1, and is kept inserted in the multicore shielded cable 1. In pulling out the sheath 2, the process of rotating the sheath 2 in the circumferential direction and untwisting the twisted cores of the multicore shielded cable 1 is performed. The processes performed in the second station St2 will be hereinafter referred to as "semi-stripping of the sheath 2."

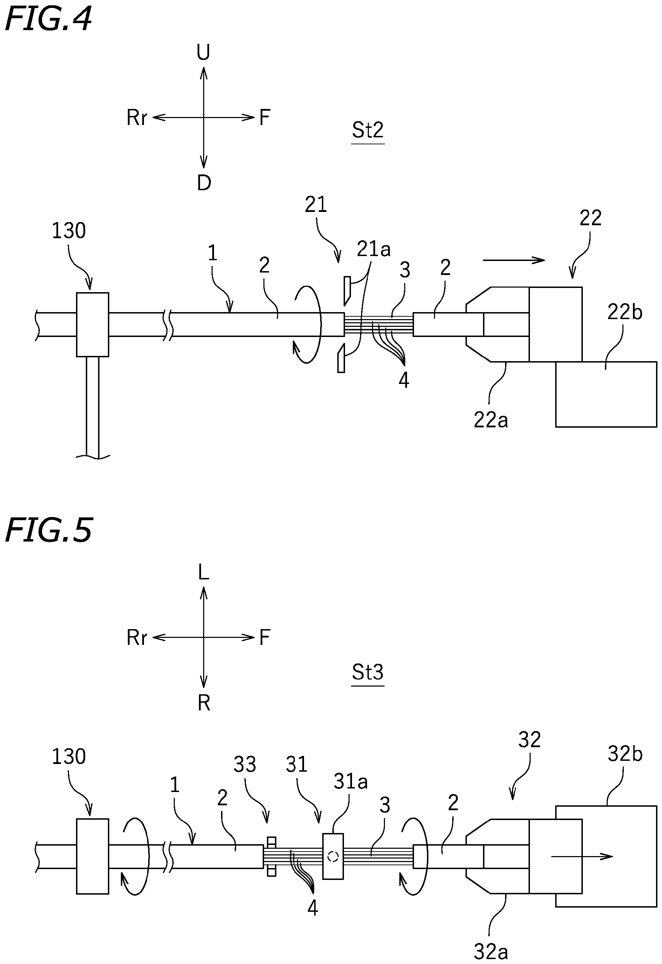

In the third station St3, the drain wire 3 exposed by semi-stripping of the sheath 2 is detected with a camera 31a (see FIG. 5), and the multicore shielded cable 1 is rotated such that the drain wire 3 is located at a predetermined position in the multicore shielded cable 1 in the circumferential direction. Then, the sheath 2 is completely pulled out from the multicore shielded cable 1. The process of pulling out the sheath 2 completely from the multicore shielded cable 1 will be hereinafter also referred to as "full-stripping of the sheath 2." Thereafter, in the third station St3, only the core wires 4 are bent while avoiding the drain wire 3 so that the core wires 4 are thereby separated from the drain wire 3.

In the fourth station St4, a correction process of the drain wire 3 that twists and straightens the drain wire 3. In the fifth station St5, an insulation process of covering the drain wire 3 with the heat shrinkable tube 6 and shrinking the heat shrinkable tube 6 by heat is performed. In the sixth station St6, the core wires 4 are bent back and aligned together with the drain wire 3 subjected to the insulation process.

In the seventh station St7, the rubber plugs 7 are attached to the core wires 4. In the eighth station St8, a tip portion of the heat shrinkable tube 6 on the drain wire 3 and tip portions of the coatings 4b on the core wires 4 are stripped. In the ninth station St9, terminals 8 are crimped to the drain wire 3 and the core wires 4. In the tenth station St10, the processed multicore shielded cable 1 is ejected.

Each process may not be carried out according to the division of each station described above. Which process is to be carried out in which station can be appropriately set, and is not particularly limited. The order of the processes may be appropriately changed as much as possible. Furthermore, the processing apparatus 200 does not need to be placed at one location, and may be divided at a plurality of places. The multicore shielded cable 1 is conveyed by different devices between the second through sixth stations St2 through St6 and the seventh station St7 and other subsequent stations, which will be described later. Thus, the processing apparatus 200, for example, may be divided into an apparatus including the first station St1 through the sixth station St6 and an apparatus including the seventh station St7 through the tenth station St10.

In the first station St1 through the tenth station St10, devices for performing processes in the individual stations are placed. The first station St1 includes a feeder 11 that conveys the multicore shielded cable 1, a measurer 12 that measures the length of the multicore shielded cable 1, and a cutter 13 that cuts the multicore shielded cable 1 in a predetermined length.

A conveyor 110 that conveys the multicore shielded cable 1 after being cut to the devices in the second station St2 through the sixth station St6 is located downstream of the first station St1. Specifically, the conveyor 110 conveys the multicore shielded cable 1 to a slitter 21, a sheath semi-stripper 22, a drain wire detector 31, a sheath stripper 32, a core wire separator 33, a drain wire corrector 41, an insulation processor 51, a rebender 61, and an aligner 62 described later. As illustrated in FIG. 2, the conveyor 110 performs the process of bending the multicore shielded cable 1 into a U shape before conveying the multicore shielded cable 1 to the second station St2. The function of the conveyor 110 that bends the multicore shielded cable 1 into a U shape will be hereinafter also referred to as a bender 110A. As illustrated in FIG. 2, the multicore shielded cable 1 is bent such that both ends of the multicore shielded cable 1 are arranged in the direction in which the first station St1 through the ninth station St9 are arranged (in the left-right direction in the drawing sheet of FIG. 2). Accordingly, the ends of the multicore shielded cable 1 are oriented toward the stations St1 through St9 (upward in the drawing sheet of FIG. 2). The conveyor 110 includes a pair of conveyance clamps 111 that holds both ends of the U-bent multicore shielded cable 1, and a clamp mover 112 that moves the conveyance clamps 111 in the direction in which the first station St1 through the ninth station St9 are arranged (in the left-right direction in the drawing sheet of FIG. 2). The second station St2 through the sixth station St6 are arranged along a path of movement of the conveyance clamps 111 by the clamp mover 112. The processing apparatus 200 performs processing on both ends of the multicore shielded cable 1. A device included in one station (e.g., second station St2) performs processing on one end of the multicore shielded cable 1 while a device located in another processing station (e.g., third station St3) performs processing on the other end of the multicore shielded cable 1. Accordingly, a cycle time of processing on the multicore shielded cable 1 is shortened. Further, in this preferred embodiment, a plurality of pairs of conveyance clamps 111 are used to perform consecutive processing on the multicore shielded cable 1.

Fixing clamps 130 that hold and rotate the multicore shielded cable 1 in the circumferential direction are located at an inlet of each of the second station St2 through the sixth station St6. The fixing clamps 130 are configured as pairs, and each pair of the fixing clamps 130 holds both ends of the U-bent multicore shielded cable 1. The fixing clamps 130 in each station receive the multicore shielded cable 1 from the conveyance clamps 111 of the conveyor 110 at the inlet of the station and hold the multicore shielded cable 1. When processing in each station is finished, the fixing clamps 130 in this station transfer the multicore shielded cable 1 to the conveyance clamps 111. The function of the fixing clamps 130 in each station may be performed by the conveyance clamps 111 additionally having the function of rotating the multicore shielded cable 1.

The second station St2 includes the slitter 21 that makes a slit in the sheath 2, and a sheath semi-stripper 22 that semi-strips the sheath 2. The third station St3 includes the drain wire detector 31 that detects the position of the drain wire 3 in the circumferential direction, the sheath stripper 32 that fully strips the sheath 2, and the core wire separator 33 that separates the core wires 4. Positioning of the drain wire 3 in the circumferential direction is performed by the sheath stripper 32 and the fixing clamps 130 based on detection of the drain wire detector 31. The sheath semi-stripper 22 and the sheath stripper 32 may be one device located in the same station. A puller that pulls out the sheath 2 may be divided into a plurality of devices as described in this preferred embodiment, or may be united as one device. For example, in this preferred embodiment, the semi-stripping of the sheath 2 involves rotation of the multicore shielded cable 1 in the circumferential direction, and the rotation of the multicore shielded cable 1 is performed by the fixing clamps 130. The puller is divided into the sheath semi-stripper 22, the sheath stripper 32, and two fixing clamps 130. The same holds for the other devices, that is, a device that performs one process may be divided into a plurality of devices, and devices that perform a plurality of processes may be united as one device.

The fourth station St4 includes the drain wire corrector 41 that corrects the drain wire 3. The drain wire corrector 41, the sheath semi-stripper 22, and the sheath stripper 32 may be one device located in the same station. These devices may be divided into a plurality of devices as described in this preferred embodiment, or may be united as one device. The fifth station St5 includes the insulation processor 51. The insulation processor 51 includes a tube reel 52 around which a reel of the heat shrinkable tube 6 is wound, a tube attacher 53 that cuts the heat shrinkable tube 6 in a predetermined length and inserts the drain wire 3 in the heat shrinkable tube 6, and a heater 54 that shrinks the heat shrinkable tube 6 by heat.

The sixth station St6 includes the rebender 61 that arranges the drain wire 3 and the core wires 4 separated by the core wire separator 33 again, and the aligner 62 that aligns the drain wire 3 and the core wires 4. In this preferred embodiment, the rebender 61 and the aligner 62 are united as one device, sharing a part of the configuration thereof, which will be described in detail later. However, the rebender 61 and the aligner 62 may be configured as separate devices. Before the bend-back process, the multicore shielded cable 1 is rotated in the circumferential direction such that the drain wire 3 and the core wires 4 are arranged along the horizontal plane. This rotation process is performed by the fixing clamps 130.

Shuttles 120 that individually hold the drain wire 3 and the core wires 4 of the multicore shielded cable 1 and a shuttle conveyor 121 that conveys the shuttles 120 to the seventh station St7 through the tenth station St10 are located downstream of the sixth station St6. Between the sixth station St6 and the seventh station St7, the multicore shielded cable 1 is transferred from the conveyor 110 to the shuttles 120. The seventh station St7 through the tenth station St10 are arranged along a path of conveyance of the shuttles 120 by the shuttle conveyor 121. In this preferred embodiment, a plurality of shuttles 120 are provided (not shown), and circulate along the looped path of movement. Each of the shuttles 120 includes a plurality of individual clamps 120a that individually hold the drain wire 3 and the core wires 4, and a loader 120b that causes the individual clamps 120a to individually approach crimpers 91 and 92 and other devices.

The seventh station St7 includes a rubber plug attacher 71. The eighth station St8 includes a core stripper 81. The ninth station St9 includes a right crimper 91 and a left crimper 92. Since different terminals 8 can be crimped to both ends of the U-bent multicore shielded cable 1, the ninth station St9 includes the right crimper 91 and the left crimper 92. The tenth station St10 includes a non-defective cable ejection tray 101 and a defective cable ejection tray 102. The shuttle 120 separates a non-defective multicore shielded cable 1 on the non-defective cable ejection tray 101, and drops the non-defective multicore shielded cable 1 onto the non-defective cable ejection tray 101. The shuttle 120 separates a defective multicore shielded cable 1 on the defective cable ejection tray 102, and drops the defective multicore shielded cable 1 onto the defective cable ejection tray 102. Determination on whether the cable is non-defective or defective is performed in each of the seventh station St7 through the ninth station St9. The multicore shielded cable 1 determined to be defective does not proceed to the next process, and is ejected to the defective cable ejection tray 102.

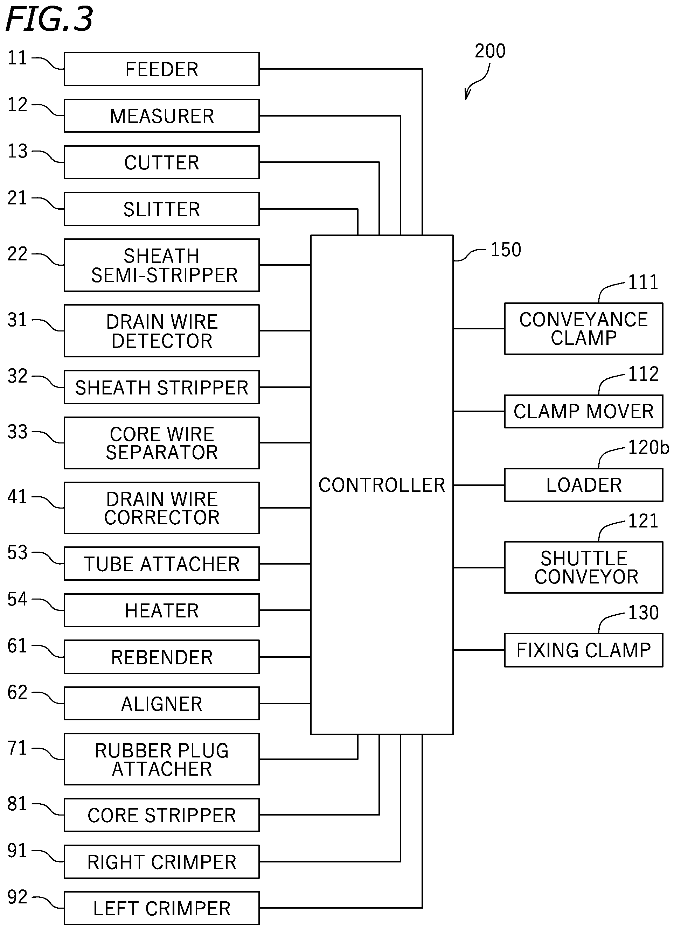

FIG. 3 is a block diagram of the processing apparatus 200. As illustrated in FIG. 3, the processing apparatus 200 includes a controller 150. The controller 150 controls operation of each section of the processing apparatus 200. The controller 150 is connected to, and controls operations of, the feeder 11, the measurer 12, the cutter 13, the slitter 21, the sheath semi-stripper 22, the drain wire detector 31, the sheath stripper 32, the core wire separator 33, the drain wire corrector 41, the tube attacher 53, the heater 54, the rebender 61, the aligner 62, the rubber plug attacher 71, the core stripper 81, the right crimper 91, the left crimper 92, the conveyance clamps 111 and the clamp mover 112 of the conveyor 110, the loaders 120b of the shuttles 120, the shuttle conveyor 121, and the fixing clamps 130 (only one of which is shown) . The controller 150 is not limited to a specific configuration. The controller 150 may include, for example, a central processing unit (hereinafter referred to as a CPU), a ROM storing a program to be executed by the CPU and so forth, and a RAM. Each section of the controller 150 may be constituted by software or may be constituted by hardware. Each section may be a processor or may be a circuit. The controller 150 may be, for example, a programmable controller or a computer.

### [Details of Processes]

Details of processes performed in each station will be described hereinafter. In the following description, the direction of the stations St1 through St9 seen from the conveyor 110 or the shuttles 120 will be referred to as front, and indicated by character F. The left and right seen toward the front will be referred to as left and right, respectively. In each drawing, F, Rr, L, R, U, and D respectively indicate front, rear, left, right, up, and down. It should be noted that these directions are defined for convenience of description, and do not limit the state of installation of the processing apparatus 200. For example, the path of movement of the conveyor 110 or the shuttles 120 may not be straight, and thus, the front can change depending on the station. The processes performed in the first station St1 and the tenth station St10 will not be described in detail.

FIG. 4 is a schematic side view of the second station St2. As illustrated in FIG. 4, the second station St2 includes the slitter 21 located forward of the fixing clamps 130, and the sheath semi-stripper 22 located forward of the slitter 21. The fixing clamps 130 hold the multicore shielded cable 1 substantially horizontally. The slitter 21 makes a slit along the circumferential direction in the sheath 2. The slitter 21 includes two or more cutting blades 21a arranged around the multicore shielded cable 1. The slitter 21 rotates the cutting blades 21a around the multicore shielded cable 1. The slitter 21 causes the cutting blades 21a to approach the sheath 2 and rotates while sandwiching the multicore shielded cable 1 with the cutting blades 21a to thereby make a slit in the sheath 2.

The sheath semi-stripper 22 moves a distal portion the sheath 2 closer to the distal end of the multicore shielded cable 1 than the slit toward the distal end with respect to a proximal portion of the sheath 2 so that the drain wire 3 and the core wires 4 are thereby exposed. The semi-stripping of the sheath 2 is the process of pulling out the distal portion of the sheath 2 such that a portion of the drain wire 3 and the core wires 4 is exposed and the distal portion of the sheath 2 remains on the other portion (distal portion in this preferred embodiment) of the drain wire 3 and the core wires 4. The semi-stripping is performed before the drain wire detector 31 detects the drain wire 3. The full-stripping is performed after the drain wire detector 31 detects the drain wire 3.

The fixing clamps 130 and the sheath semi-stripper 22 move the distal portion of the sheath 2 toward the distal end of the multicore shielded cable 1 while rotating the distal portion of the sheath 2 in the circumferential direction with respect to the proximal portion of the sheath 2 in the semi-stripping process. In this preferred embodiment, the multicore shielded cable 1 including the proximal portion of the sheath 2 is rotated while being sandwiched by the fixing clamps 130, and the distal portion of the sheath 2 is moved toward the distal end by the sheath semi-stripper 22. Accordingly, the fixing clamps 130 and the sheath semi-stripper 22 untwist a twist of the drain wire 3 and the core wires 4. The sheath semi-stripper 22 includes a clamp 22a that holds the distal portion of the sheath 2, and a clamp mover 22b that moves the clamp 22a in the longitudinal direction of the multicore shielded cable 1.

In the semi-stripping process, the clamp 22a holds the distal portion of the sheath 2 closer to the distal end than the slit. Then, the fixing clamps 130 rotate in the direction of untwisting the cores, and the clamp 22a moves toward the distal end of the multicore shielded cable 1. Accordingly, the distal portion of the sheath 2 is pulled out, and the twist of the cores is untwisted. The untwisting of the cores eases detection of the position of the drain wire 3 in a subsequent process. In addition, in this preferred embodiment, pulling out of the sheath 2 and untwisting of the cores are performed at the same time to thereby shorten a cycle time of the process of the multicore shielded cable 1. The movement of the clamp 22a is stopped before the distal portion of the sheath 2 is completely separated from the drain wire 3 and the core wires 4. Accordingly, the semi-stripping including untwisting of the drain wire 3 and the core wires 4 is finished.

It should be noted that in the semi-stripping and the untwisting, the member that moves in the longitudinal direction of the multicore shielded cable 1 and the member that rotates in the circumferential direction of the multicore shielded cable 1 are not limited to the members described above. In the semi-stripping, it is sufficient that at least one of the distal portion and the proximal portion of the sheath 2 is moved such that the distal portion and the proximal portion of the sheath 2 are moved away from each other in the longitudinal direction of the multicore shielded cable 1. At this time, the proximal portion of the sheath 2 may be moved, or both the distal portion and the proximal portion of the sheath 2 may be moved. The expression "pulling out the distal portion of the sheath 2" means such relative movement of the distal portion and the proximal portion of the sheath 2. In the untwisting, it is sufficient to pull out the distal portion of the sheath 2 while rotating at least one of the distal portion and the proximal portion of the sheath 2 such that the distal portion of the sheath 2 rotates in the circumferential direction with respect to the proximal portion of the sheath 2. Accordingly, the drain wire 3 and the core wires 4 are untwisted. The same holds for movement and rotation in the other devices, and a member that moves or rotates can be a counterpart of a member described or both of the counterpart and the member.

The slitting and semi-stripping of the sheath 2 are first performed on a front end (left end in this preferred embodiment) of the U-bent multicore shielded cable 1 in the conveyance direction. Thereafter, the multicore shielded cable 1 is moved leftward, and slitting and semi-stripping of the sheath 2 are performed on the right end of the multicore shielded cable 1. While the slitting and semi-stripping of the sheath 2 are performed on the right end of the multicore shielded cable 1, the process in the third station St3 may be performed on the left end of the multicore shielded cable 1. The same holds for other processes performed in the third station St3 through the sixth station St6 unless otherwise specified.

FIG. 5 is a schematic plan view of the third station St3. As illustrated in FIG. 5, the third station St3 includes the drain wire detector 31 including the camera 31a. The drain wire detector 31 detects the exposed drain wire 3 and detects the position of the drain wire 3 in the circumferential direction of the multicore shielded cable 1. In this preferred embodiment, the drain wire detector 31 captures an image of the exposed drain wire 3 and core wires 4 with the camera 31a. The drain wire 3 is made of conductor strands and has metal gloss. Each of the core wires 4 is covered with the coating 4b. Thus, the drain wire detector 31 can distinguish the drain wire 3 from the core wires 4.

As illustrated in FIG. 5, the sheath stripper 32 in the third station St3 includes a rotating clamp 32a, and a clamp mover 32b that moves the rotating clamp 32a in the longitudinal direction of the multicore shielded cable 1. The rotating clamp 32a holds the distal portion of the sheath 2 (i.e., a portion of the sheath 2 not completely pulled out from the multicore shielded cable 1). When the drain wire detector 31 detects the position of the drain wire 3 in the circumferential direction, the fixing clamps 130 and the rotating clamp 32a of the sheath stripper 32 rotate in synchronization with each other, and the drain wire 3 is oriented toward the 12 o'clock position when seen in the front-rear direction. When the drain wire detector 31 detects that the drain wire 3 is located at the 12 o'clock position, rotation of the fixing clamps 130 and the rotating clamp 32a of the sheath stripper 32 is stopped. Thereafter, the sheath stripper 32 further moves the distal portion of the sheath 2 toward the distal end of the multicore shielded cable 1 to perform full-stripping of separating the sheath 2 from the drain wire 3 and the core wires 4. The full-stripping is performed after the drain wire detector 31 detects the drain wire 3. This is intended to avoid difficulty in detecting the drain wire 3 by the drain wire detector 31 due to spreading-out of the drain wire 3 and core wires 4. Since the sheath 2 remains on distal portions of the drain wire 3 and the core wires 4, spreading-out of the drain wire 3 and the core wires 4 is suppressed.

The method for detecting the drain wire 3 is not limited to the method of capturing an image of the drain wire 3 with the camera 31a. The position of the drain wire 3 may be detected by a probe that causes a current to flow in the drain wire 3, for example.

The core wire separator 33 in the third station St3 separates the drain wire 3 and the core wires 4 based on the position of the drain wire 3 in the circumferential direction detected by the drain wire detector 31. The separation of the drain wire 3 and the core wires 4 eases a process of the drain wire 3 in a subsequent process. In this preferred embodiment, the core wire separator 33 forces the core wires 4 downward so that the drain wire 3 and the core wires 4 are separated. Accordingly, the core wires 4 are bent downward and separated from the drain wire 3. The reason for forcing the core wires 4 is because the core wires 4 are covered with the coatings 4b and therefore can be bent without spreading-out of conductor strands. It should be noted that the separator for the core wires 4 and the drain wire 3 only needs to separate the drain wire 3 and the core wires 4 by forcing at least one of the drain wire 3 or the core wires 4, and is not limited to a configuration as described in this preferred embodiment. The separator may separate the drain wire 3 and the core wires 4 by forcing the drain wire 3, or both of the core wires 4 and the drain wire 3, for example. The separator may plastically bend the core wires 4 (or the drain wire 3) as described in this preferred embodiment, or may elastically bend the core wires 4 (or the drain wire 3) such that the core wires 4 (or the drain wire 3) return when the forcing is stopped.

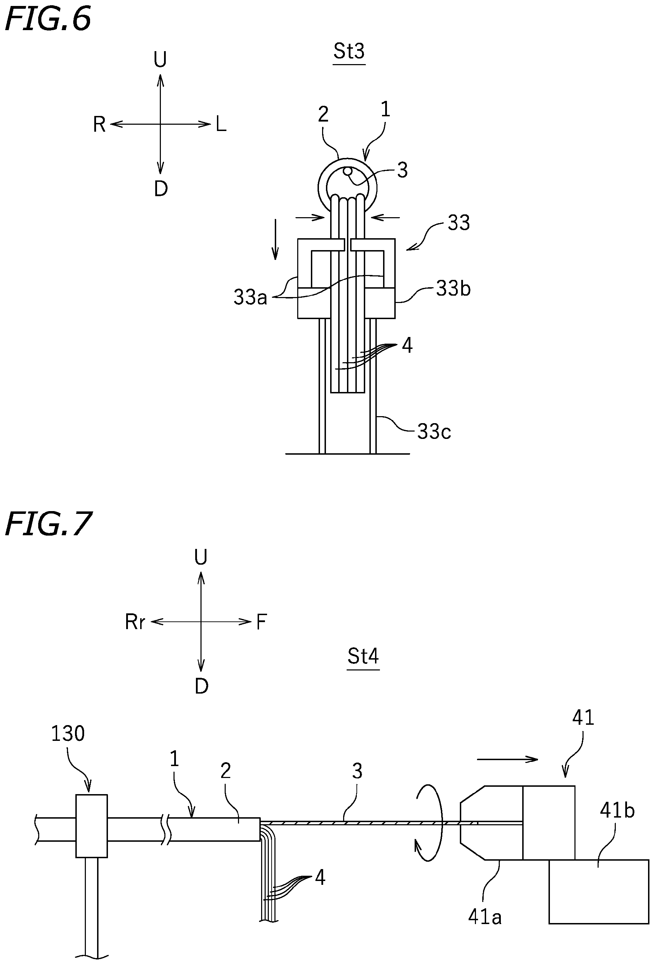

FIG. 6 is a schematic front view of the third station St3 and illustrates a state where the core wires 4 are separated. As illustrated in FIG. 6, the core wire separator 33 includes a pair of left and right hooks 33a, a hook opener/closer 33b, and a hook mover 33c. The pair of hooks 33a is opened and closed by moving toward or away from each other in the left-right direction. The hook opener/closer 33b is a driver that opens and closes the pair of hooks 33a. The hook mover 33c is a driver that moves the pair of hooks 33a in the top-bottom direction. When the pair of hooks 33a is closed, the pair of hooks 33a surrounds the multicore shielded cable 1 except for the 12 o'clock direction, seen in the front-rear direction. In this state, when the pair of hooks 33a is moved downward by the hook mover 33c, the core wires 4 are hooked by the pair of hooks 33a to be bent downward. The drain wire 3 is not hooked on the pair of hooks 33a and remains. Accordingly, the drain wire 3 and the core wires 4 are separated from each other. The position of the drain wire 3 in the circumferential direction is not limited to the 12 o'clock direction, and the bending direction of the core wires 4 is not limited to downward.

FIG. 7 is a schematic side view of the fourth station St4. The fourth station St4 includes the drain wire corrector 41 that corrects the separated drain wire 3 before an insulation process. The drain wire corrector 41 applies tensile tension while twisting the separated drain wire 3 in the circumferential direction to thereby correct the separated drain wire 3. As illustrated in FIG. 7, the drain wire corrector 41 includes a rotating clamp 41a, and a clamp mover 41b that moves the rotating clamp 41a in the longitudinal direction of the multicore shielded cable 1. In the correction of the drain wire 3, the rotating clamp 41a holds a portion of an exposed portion of the drain wire 3 close to the proximal end. At this time, the rotating clamp 41a holds the exposed portion of the drain wire 3 with a weak holding power with which the holding position slips when the rotating clamp 41a is moved forward. The drain wire corrector 41 rotates the rotating clamp 41a and moves the rotating clamp 41a forward while the rotating clamp 41a holds the drain wire 3 with the weak holding force. When the rotating clamp 41a moves close to the distal end of the drain wire 3, the drain wire corrector 41 increases the holding force of the rotating clamp 41a and firmly twists the drain wire 3. Accordingly, the drain wire 3 is firmly twisted and corrected to a linear shape. The correction of the drain wire 3 eases the insulation process of the drain wire 3.

It should be noted that the drain wire corrector 41 only needs to apply a tensile tension to the drain wire 3 while twisting the drain wire 3 in the circumferential direction, and operation thereof is not limited to that described above. For example, the drain wire corrector 41 may strongly hold a portion of the drain wire 3 near the distal end from the beginning and twist the drain wire 3 while applying a tensile tension.

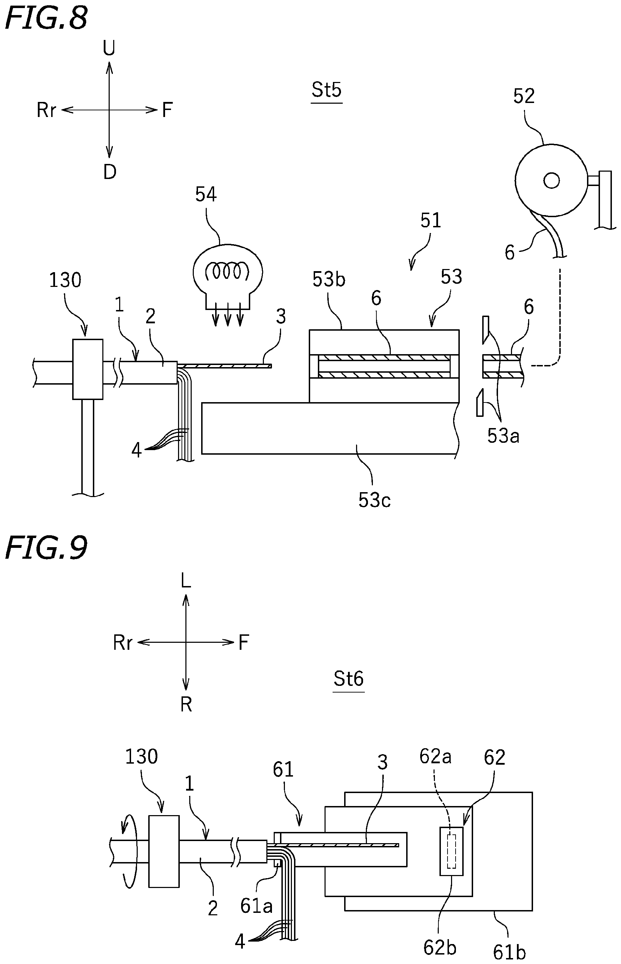

FIG. 8 is a schematic side view of the fifth station St5. As illustrated in FIG. 8, the fifth station St5 includes the insulation processor 51 that performs an insulation process on the separated drain wire 3. The insulation processor 51 herein includes a tube reel 52 around which the heat shrinkable tube 6 to be cut is wound, a tube attacher 53 that inserts the separated drain wire 3 into the heat shrinkable tube 6, and a heater 54 that heats the heat shrinkable tube 6 in which the drain wire 3 is inserted. In the insulation process, the heat shrinkable tube 6 is pulled out from the reel by the tube attacher 53 and is cut in a predetermined length by a tube cutter 53a of the tube attacher 53. In this preferred embodiment, the tube attacher 53 moves a holder 53b holding the heat shrinkable tube 6 after being cut rearward (toward the fixing clamps 130). The tube attacher 53 includes a holder mover 53c that moves the holder 53b in the front-rear direction. Accordingly, the drain wire 3 is inserted in the heat shrinkable tube 6. In this state, the heater 54 supplies hot air into the holder 53b. Accordingly, the heat shrinkable tube 6 shrinks by heat, and the drain wire 3 is subjected to the insulation process.

The method for performing the insulation process on the drain wire 3 is not limited to the method of covering the drain wire 3 with the heat shrinkable tube 6. The insulation process of the drain wire 3 may be performed by winding an insulating tape around the drain wire 3, for example. It should be noted that the method of covering the drain wire 3 with the heat shrinkable tube 6 has the advantage of being easily performed by an automatic machine.

FIG. 9 is a schematic plan view of the sixth station St6. As illustrated in FIG. 9, the sixth station St6 includes a rebender 61 that bends back the core wires 4 bent in the in the separation process, and an aligner 62 that aligns the drain wire 3 and the core wires 4. The rebender 61 is an example of a returner of rearranging the drain wire 3 and the core wires 4 separated in the separation process. In this preferred embodiment, the drain wire 3 and the core wires 4 are regularly arranged again by bending back the core wires 4 bent in the separation process. Alternatively, in a case where the core wires 4 (or the drain wire 3) are simply elastically deformed in the separation process, the returner may cancel forcing of the core wires 4 (or the drain wire 3). As described above, in this preferred embodiment, the rebender 61 and the aligner 62 are united while partially sharing the configuration.

In the sixth station St6, before the bend-back process and the alignment process, the rotation process of rotating the multicore shielded cable 1 in the circumferential direction such that the drain wire 3 and the core wires 4 are arranged in a predetermined arrangement direction, i.e., the left-right direction in this preferred embodiment, is performed. In the rotation process, the fixing clamps 130 rotate the multicore shielded cable 1 in the circumferential direction, and position the drain wire 3 at a predetermined rotation position, that is, the 3 o'clock position in the front view. Accordingly, as illustrated in FIG. 9, the drain wire 3 moves to the leftmost position among the cores. In this preferred embodiment, the fixing clamps 130 rotate the multicore shielded cable 1 by 90 degrees. After the rotation process, the core wires 4 are located rightward of the drain wire 3. However, in the rotation process, the drain wire 3 may be located at the right end. In a case where the position of the drain wire 3 is fixed at the left end or the right end, subsequent processes can be easily performed, which will be specifically described later.

The rebender 61 performs banding-back of bending back one of the drain wire 3 or the core wires 4 bent by the core wire separator 33 (the core wires 4 in this embodiment) . As illustrated in FIG. 9, the rebender 61 includes a pair of upper and lower rollers 61a (only the lower roller 61a is shown), an opener/closer (unillustrated) of the roller 61a, and a roller mover 61b. In this bending-back, the rebender 61 first drives the opener/closer and sandwiches proximal portions of the exposed drain wire 3 and core wires 4 (near the remaining sheath 2) with the pair of rollers 61a. The rollers 61a are configured to be able to rotate in the front-rear direction. Each of the rollers 61a has a plurality of grooves individually corresponding to the drain wire 3 and the core wires 4. The grooves are formed along the outer peripheral surfaces of the rollers 61a. The rebender 61 drives the roller mover 61b and moves the pair of rollers 61a forward, in the state that the drain wire 3 and the core wires 4 are sandwiched by the pair of rollers 61a. Accordingly, the drain wire 3 and the core wires 4 (especially the core wires 4 bent in the separation process) are extended straight in the front-rear direction along the grooves of the rollers 61a. It should be noted that the technique of bending back the core wires 4 is not limited to the technique using the rollers as described above.

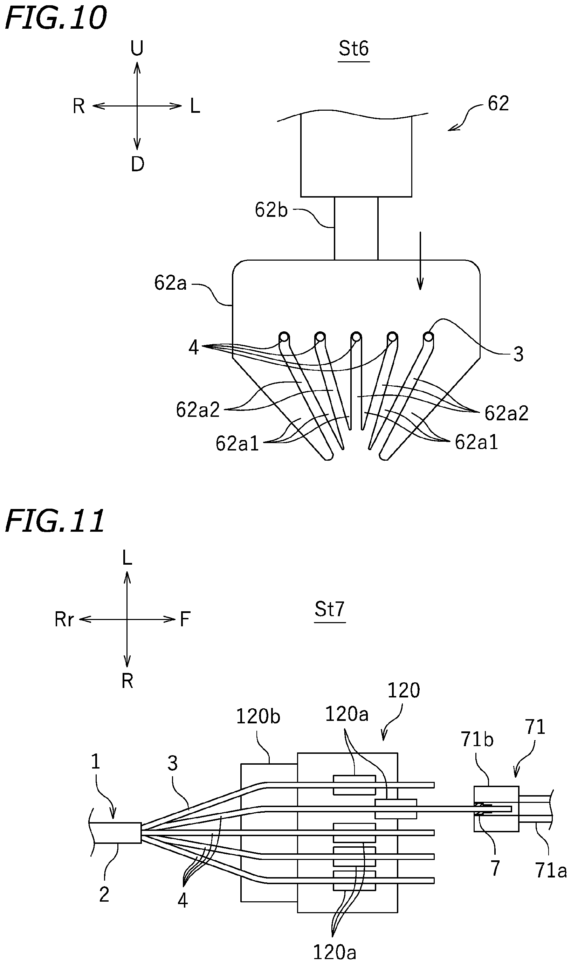

The aligner 62 aligns the drain wire 3 and the core wires 4 with predetermined intervals in the left-right direction. The alignment of the drain wire 3 and the core wires 4 is performed after the bend-back process. FIG. 10 is a schematic front view of the sixth station St6 and illustrates a state where the drain wire 3 and the core wires 4 are aligned. As illustrated in FIG. 10, the aligner 62 includes an alignment member 62a for aligning the drain wire 3 and the core wires 4, and a mover 62b that causes the alignment member 62a to approach the drain wire 3 and the core wires 4. The alignment member 62a is a flat-plate member extending in the left-right direction and the top-bottom direction, and includes a plurality of comb teeth 62a1 arranged in the left-right direction. A plurality of gaps 62a2 corresponding to the drain wire 3 and the core wires 4 are located between the comb teeth 62a1. The mover 62b moves the alignment member 62a in a direction orthogonal to the direction in which the cores are arranged, that is, in the top-bottom direction in this preferred embodiment, and inserts each of the drain wire 3 and the core wires 4 in a corresponding one of the gaps 62a2 in the alignment member 62a. The mover 62b may move the multicore shielded cable 1 or may move both of the alignment member 62a and the multicore shielded cable 1. It is sufficient that the mover 62b moves at least one of the alignment member 62a and the multicore shielded cable 1. In the alignment member 62a, the distance between each adjacent two of the gaps 62a2 gradually increases toward the front in the movement direction in inserting the drain wire 3 and the core wires 4 (upward in this preferred embodiment, i.e., rearward in the movement direction of the alignment member 62a). The gaps 62a2 are arranged with predetermined intervals in the left-right direction at the front end (i.e., dead ends of the gaps 62a2) in the direction of movement of the drain wire 3 and the core wires 4. As illustrated in FIG. 10, when the drain wire 3 and the core wires 4 are inserted to the dead ends of the gaps 62a2, the drain wire 3 and the core wires 4 are arranged with predetermined intervals in the left-right direction. This alignment enables the positions of the drain wire 3 and the core wires 4 in the left-right direction to be specified, and a subsequent process such as the process of transferring the multicore shielded cable 1 to the shuttle 120, can be smoothly performed.

After the alignment process, the multicore shielded cable 1 is transferred from the conveyor 110 to the shuttle 120. As illustrated in FIG. 11, for example, the shuttle 120 includes a plurality of individual clamps 120a arranged with substantially the same intervals as the aligned drain wire 3 and core wires 4. Each of the individual clamps 120a holds a corresponding one of the drain wire 3 subjected to the insulation process and the core wires 4. In this preferred embodiment, each of the individual clamps 120a sandwiches the drain wire 3 or the core wire 4 with an elastic force. The drain wire 3 and the core wires 4 are inserted in the individual clamps 120a by unillustrated other comb teeth, for example. As illustrated in FIG. 2, the individual clamps 120a include an upstream group 120R that holds the cores 3 and 4 exposed at the upstream end of the bent multicore shielded cable 1, and a downstream group 120L that is located downstream of the upstream group 120R in the conveyance direction and holds the cores 3 and 4 exposed at the downstream end of the bent multicore shielded cable 1.

FIG. 11 is a schematic plan view of the seventh station St7. As illustrated in FIG. 11, the seventh station St7 includes the rubber plug attacher 71 to which tip portions of the core wires 4 are loaded and which attaches the rubber plugs 7 to the loaded core wires 4. In this preferred embodiment, the rubber plug attacher 71 includes a rubber plug feeder 71a and a rubber plug clamp 71b. The rubber plug feeder 71a supplies the rubber plug 7 into the rubber plug clamp 71b with compressed air or the like, for example. The rubber plug clamp 71b holds the rubber plug 7 from the outside in the radial direction. As illustrated in FIG. 11, the shuttles 120 includes the loader 120b that moves the individual clamps 120a in the front-rear direction individually. The loader 120b individually moves the individual clamps 120a before coatings on the tip portions of the core wires 4 are stripped, and the loader 120b loads the core wires 4 held by the individual clamps 120a to the rubber plug attacher 71 individually. The core wires 4 move forward together with the individual clamps 120a to be thereby inserted in the rubber plugs 7. In this preferred embodiment, while the shuttle 120 intermittently moves leftward, the rubber plugs 7 are attached to eight ends of the four core wires 4. This intermittent movement of the shuttles 120 is similar to a strip process of the cores except that the drain wire 3 is also a target of the process in the strip process. The intermittent movement of the shuttle 120 is similar to that in a crimping process except that the drain wire 3 is also a target of the process and that the left end and the right end of the multicore shielded cable 1 are processed by the different crimpers 91 and 92 in the crimping process.

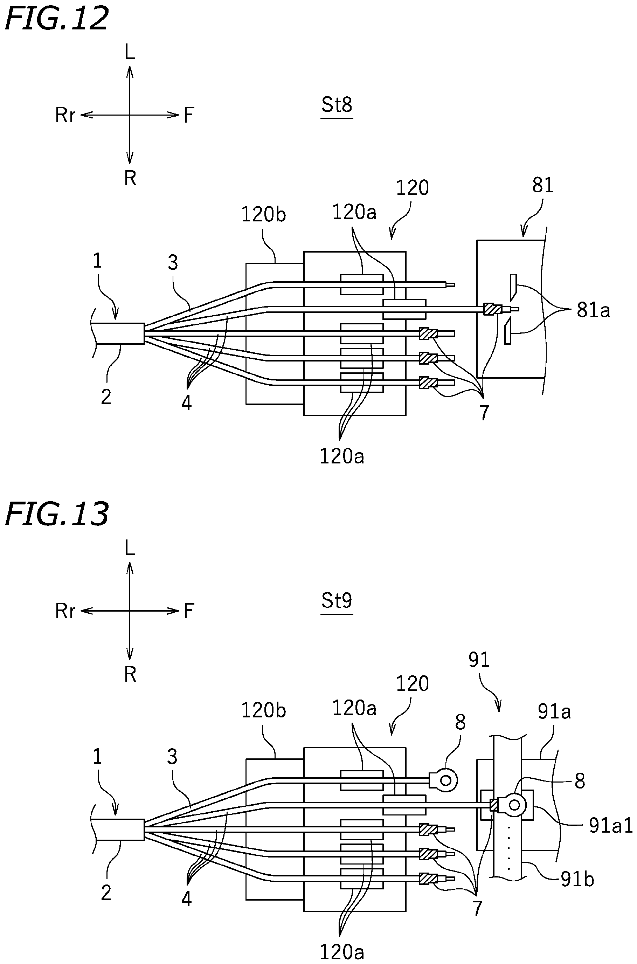

FIG. 12 is a schematic plan view of the eighth station St8. As illustrated in FIG. 12, the eighth station St8 includes the core stripper 81 to which a tip portion of the drain wire 3 or the core wire 4 is loaded and which strips the coating on the tip portion of the loaded drain wire 3 or the core wire 4. The loader 120b of the shuttle 120 moves the individual clamps 120a individually and loads the drain wire 3 or the core wire 4 held by the individual clamps 120a to the core stripper 81 individually. The core stripper 81 includes a pair of strip blades 81a.

The drain wire 3 and the core wires 4 whose front ends are stripped are trimmed evenly with an unillustrated cutter of the core stripper 81. Through the trimming process, tip positions of the drain wire 3 and the core wires 4 are specified. Accordingly, a crimping process can be smoothly performed.

FIG. 13 is a schematic plan view of the ninth station St9. As illustrated in FIG. 13, the ninth station St9 includes the right crimper 91 that is loaded with a front end of the drain wire 3 or the core wire 4 and crimps the terminal 8 to the tip portion of the loaded drain wire 3 or the core wire 4. As illustrated in FIG. 2, the ninth station St9 also includes the left crimper 92. The loader 120b of the shuttle 120 individually moves the individual clamps 120a and loads the drain wire 3 or the core wire 4 each of which is held by the individual clamp 120a and from which a coating on the tip portion has been stripped, to the crimper 91 or 92. The configurations of the right crimper 91 and the left crimper 92 are substantially the same, and thus, only the configuration of the right crimper 91 will now be described.

The right crimper 91 includes an applicator 91a, an unillustrated press that presses the applicator 91a, and a terminal reel 91b. The applicator 91a includes a crimper (not shown) as a die for molding the terminal 8, and an anvil 91a1. The crimper and the anvil 91a1 are opposed to each other in the top-bottom direction. The terminal 8 is supplied from the terminal reel 91b to a space between the crimper and the anvil 91a1, and when the press is driven in the state that the tip portion of the core of the multicore shielded cable 1 is inserted between the crimper and the anvil 91a1, the crimper and the anvil 91a1 approach each other, and the terminal 8 is crimped to the tip portion of the core of the multicore shielded cable 1.

Attachment of the rubber plug 7, stripping of the core, and crimping of the terminal 8 are preferably performed on the cores one by one in terms of quality control. Thus, in this preferred embodiment, the drain wire 3 or the core wire 4 is loaded by the loader 120b one by one to the rubber plug attacher 71, the core stripper 81, the right crimper 91, or the left crimper 92. In this preferred embodiment, since the left and right positions of the cores are specified by the alignment process, the attachment of the rubber plug 7, the stripping of the cores, and the crimping of the terminal 8 can be reliably performed. In addition, since the drain wire 3 is placed at left end in the rotation process, the position of the drain wire 3 is also already specified in a subsequent process (i.e., it is known that the core at the left end is the drain wire 3). Accordingly, it is easily determined in a subsequent process whether the current process is directed to the drain wire 3 or the core wire 4. For example, in the case of using the terminal 8 for the drain wire 3 different from that for the core wire 4 in the crimping process, the position of the drain wire 3 needs to be specified.

Attachment of the rubber plug 7, stripping of the cores 3 and 4, and crimping of the terminal 8 do not need to be performed on all the cores 3 and 4 (all the cores 4 in the case of attachment of the rubber plug 7). These processes may not be performed on the drain wire 3, and may not be performed on some of the core wires 4. Exposed portions of the drain wire 3 or the core wires 4 not subjected to these processes may be cut off before these processes.

### [Conveyor]

Specifically, the conveyor of the multicore shielded cable 1 in the processing apparatus 200 may have the following configuration. The configuration of the conveyor, however, is not limited to those as described below.

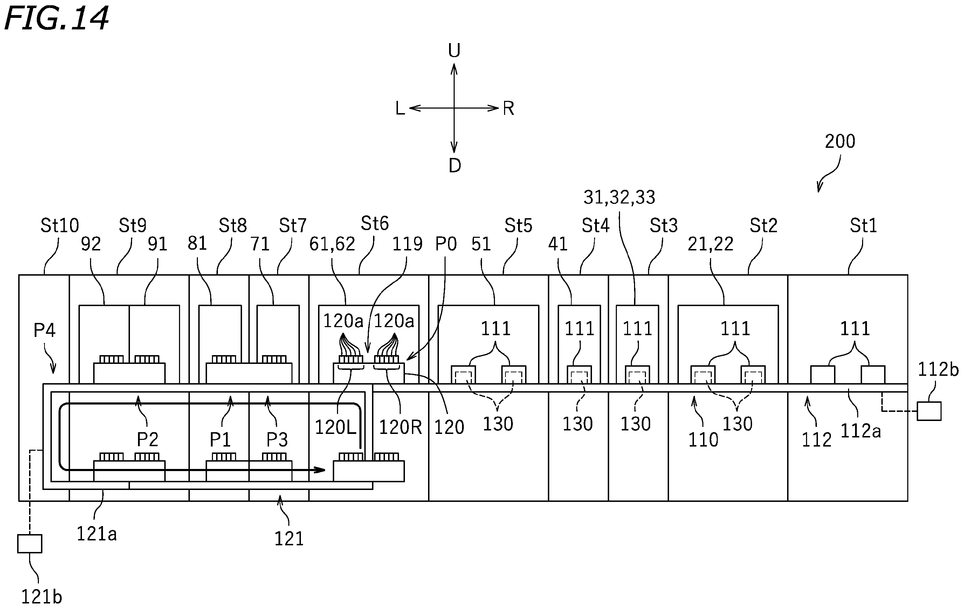

FIG. 14 is a rear view of the conveyor of the multicore shielded cable 1. As illustrated in FIG. 14, in one preferred embodiment, the conveyor of the multicore shielded cable 1 includes: the conveyor 110 (upstream conveyor, hereinafter also referred to as a first conveyor 110) that conveys the multicore shielded cable 1 to the slitter 21, the sheath semi-stripper 22, the drain wire detector 31, the sheath stripper 32 (including the rotating clamp 32a as a rotator that rotates the multicore shielded cable 1 based on the circumferential position of the drain wire 3 detected by the drain wire detector 31 and locates the drain wire 3 at a predetermined rotation position (12 o'clock position in this preferred embodiment)), the core wire separator 33, the drain wire corrector 41, the insulation processor 51, the rebender 61, and the aligner 62; and a second conveyor 119 (downstream conveyor) that conveys the multicore shielded cable 1 to the rubber plug attacher 71, the core stripper 81, the right crimper 91, and the left crimper 92. The second conveyor 119 includes the shuttles 120 each including the individual clamps 120a that individually hold the cores 3 and 4 of the multicore shielded cable 1, and the shuttle conveyor 121 that moves the shuttles 120. In this preferred embodiment, the second conveyor 119 includes the plurality of shuttles 120.

The first conveyor 110 faces the processing stations St2 through St6, and includes the fixing clamps 130 that hold the multicore shielded cable 1, and the conveyance clamps 111 each configured to hold the multicore shielded cable 1 and to reciprocate between adjacent two of the fixing clamps 130. The fixing clamps 130 are examples of fixing holders that hold the multicore shielded cable 1.

The conveyance clamps 111 of the first conveyor 110 are arranged at the same pitch in the conveyance direction of the multicore shielded cable 1, and reciprocate along the conveyance direction. The clamp mover 112 of the first conveyor 110 includes a slide rail 112a which extends in the conveyance direction and with which the conveyance clamps 111 are engaged, and a driver 112b that moves the conveyance clamps 111 along the slide rail 112a. The fixing clamps 130 as fixing holders are arranged such that the fixing clamps 130 and the conveyance clamps 111 at the stationary position are arranged in the front-rear direction. The pitch of the fixing clamps 130 is equal to the pitch of the conveyance clamps 111 and is uniform.

The most upstream two conveyance clamps 111 in the conveyance direction hold the U-bent multicore shielded cable 1 at two locations, and move the multicore shielded cable 1 to a position directly facing the second station St2. Two of the fixing clamps 130 located rearward of the second station St2 hold the conveyed multicore shielded cable 1 at two locations. Thereafter, the conveyance clamps 111 return to a position rearward of the first station St1 and hold the next multicore shielded cable 1. Other conveyance clamps 111 and other fixing clamps 130 also operate similarly to those described above. Accordingly, a plurality of multicore shielded cables 1 are sequentially conveyed downstream in the conveyance direction.

The shuttle conveyor 121 of the second conveyor 119 moves the shuttles 120 among an intake position P0 at which the multicore shielded cable 1 is taken, a first facing position P1 facing the core stripper 81, a second facing position P2 facing the crimpers (the right crimper 91 and the left crimper 92), a third facing position P3 facing the rubber plug attacher 71 in the case of the processing apparatus 200 including the rubber plug attacher 71, and a release position P4 at which the multicore shielded cable 1 to which the terminal 8 is crimped is released. In this preferred embodiment, the shuttle conveyor 121 moves the shuttles 120 cyclically. However, the shuttle conveyor 121 may cause one shuttle 120 to reciprocate or to move cyclically.

In this preferred embodiment, since the multicore shielded cable 1 is bent in a U shape, the first facing position P1 includes an upstream first facing position at which the downstream end of the multicore shielded cable 1 faces the core stripper 81, and a downstream first facing position at which the upstream end of the multicore shielded cable 1 faces the core stripper 81. The same holds for the third facing position P3. The second facing position P2 includes an upstream second facing position at which the downstream end of the multicore shielded cable 1 faces the right crimper 91, and a downstream second facing position at which the upstream end of the multicore shielded cable 1 faces the left crimper 92. In this preferred embodiment, the device located in each of the processing stations St7 through St9 performs a process on the downstream end of the multicore shielded cable 1 while the device located in the processing station adjacent to the upstream side performs a process on the upstream end of the multicore shielded cable 1. For example, while the core stripper 81 performs stripping on the upstream end of the multicore shielded cable 1, the right crimper 91 crimps the terminal 8 to the downstream end. Accordingly, in this preferred embodiment, the downstream first facing position and the upstream second facing position are the same, for example. In the manner described above, the intake position P0, the third facing position P3, the first facing position P1, the second facing position P2, and the release position P4 may partially overlap with each other.

As illustrated in FIG. 14, the shuttle conveyor 121 includes a circulation member 121a to which the shuttles 120 are fixed and which runs in a loop pattern, and a driver 121b causing the circulation member 121a to run cyclically. The circulation member 121a is, for example, an endless belt or chain. In this preferred embodiment, the circulation member 121a forms a loop when seen in the front-rear direction. In this preferred embodiment, the cyclic movement of the shuttles 120 includes lateral movement among the intake position P0, the third facing position P3, the first facing position P1, and the second facing position P2 and vertical movement among a vertical position where the intake position P0, the third facing position P3, the first facing position P1, and the second facing position P2 belong to and another vertical position below the intake position P0, the third facing position P3, the first facing position P1, and the second facing position P2. The release position P4 in this preferred embodiment is set at the upper stage of the loop together with the intake position P0, the third facing position P3, the first facing position P1, and the second facing position P2, but may be set at the lower stage or between the upper stage and the lower stage of the loop. Alternatively, the circulation members 121a may be arranged along the horizontal plane and forms a loop in a plan view, for example.

The individual clamps 120a of the shuttle 120 hold the cores 3 and 4 while the shuttle 120 moves to the intake position P0 from a position below the intake position P0. Each of the individual clamps 120a has a U shape that is open upward, and retains the drain wire 3 or the core wire 4 inside the U shape. The individual clamps 120a are elastic enough to allow the cores 3 and 4 to be inserted in the U shape and to keep the cores 3 and 4 therein after the insertion. The core wires 3 and 4 are forced into the individual clamps 120a by upward movement of the shuttle 120 toward the intake position P0 and an action of a retainer of the aligner 62 covering the cores 3 and 4 from above to retain the cores 3 and 4.

In the manner described above, the processing apparatus 200 according to this preferred embodiment includes: the first conveyor 110 that conveys the multicore shielded cable 1 to the slitter 21, the sheath semi-stripper 22, the drain wire detector 31, the sheath stripper 32 (including the rotating clamp 32a), the core wire separator 33, the drain wire corrector 41, the insulation processor 51, the rebender 61, and the aligner 62; and the second conveyor 119 that conveys the multicore shielded cable 1 to the rubber plug attacher 71, the core stripper 81, and the crimpers 91 and 92. The second conveyor 119 includes the shuttles 120 each including the individual clamps 120a individually holding the cores 3 and 4, and the shuttle conveyor 121 that moves the shuttles 120. The shuttle conveyor 121 moves the shuttles 120 among the intake position P0 at which the multicore shielded cable 1 is taken, the third facing position P3 facing the rubber plug attacher 71, the first facing position P1 facing the core stripper 81, the second facing position P2 facing the crimpers 91 and 92, and the release position P4 at which the multicore shielded cable 1 to which the terminal 8 is crimped is released. This processing apparatus 200 can convey the multicore shielded cable 1 without switching holding of the cores 3 and 4 among attachment of the rubber plug 7, stripping of the cores 3 and 4, and crimping of the terminal 8. Accordingly, the possibility of change of positions of the cores 3 and 4 due to switching of holding does not arise, and the positions are stabilized. In this manner, attachment of the rubber plug 7, stripping of the cores 3 and 4, and crimping of the terminal 8 can be obtained with high quality.

In this preferred embodiment, the multiple shuttle conveyor 121 cyclically moves the shuttles 120. Accordingly, the shuttles 120 can be returned from the release position P4 to the intake position P0, and the multicore shielded cable 1 can be conveyed consecutively. In addition, since the multiple shuttles 120 are circulated, productivity can be enhanced.

In this preferred embodiment, the cyclic movement of the shuttles 120 includes lateral movement among the intake position P0, the third facing position P3, the first facing position P1, and the second facing position P2 and vertical movement among a vertical position where the intake position P0, the third facing position P3, the first facing position P1, and the second facing position P2 belong to and another vertical position below the intake position P0, the third facing position P3, the first facing position P1, and the second facing position P2. The individual clamps 120a of the shuttles 120 hold the cores 3 and 4 while the shuttles 120 move to the intake position P0 from a position below the intake position P0. With this configuration, the cores 3 and 4 can be held by utilizing vertical movement during cyclic movement of the shuttles 120, and thus, the process time can be shortened.

In this preferred embodiment, the first conveyor 110 faces the processing stations St2 through St6, and includes the fixing clamps 130 holding the multicore shielded cable 1, and the conveyance clamps 111 each configured to hold the multicore shielded cable 1 and to reciprocate between adjacent two of the fixing clamps 130. The number of conveyance clamps 111 may be one depending on the number of fixing clamps 130. In this processing apparatus 200, in processes not requiring precise positioning for conveyance of the multicore shielded cable 1 (processes from the cutting a slit in the sheath 2 through the alignment of the cores 3 and 4, in this preferred embodiment), the conveyance clamps 111 reciprocate and holding of the multicore shielded cable 1 is switched. Accordingly, the configuration of the conveyor (first conveyor 110) of the multicore shielded cable 1 in these processes is simplified.

In this preferred embodiment, in the processes not requiring precise positioning for conveyance of the multicore shielded cable 1, holding of the multicore shielded cable 1 is switched to simplify the first conveyor 110, whereas in processes requiring positioning accuracy of the cores 3 and 4 (processes from the attachment of the rubber plug 7 through the crimping of the terminal 8), holding of the multicore shielded cable 1 is not switched and the shuttles 120 holding the cores 3 and 4 are moved. Accordingly, the processing apparatus 200 is simplified as a whole, and processing quality of the multicore shielded cable 1 is enhanced.

In this preferred embodiment, the processing stations St2 through St6 are arranged in the direction of conveyance of the multicore shielded cable 1 by the conveyance clamps 111. The processing apparatus 200 includes the bender 110A (the bending function of the conveyor 110 in this preferred embodiment, however, the bender may be a dedicated bender) that is located upstream of the processing stations St2 through St6 in the conveyance direction and bends the multicore shielded cable 1 in a substantially U shape such that both ends of the multicore shielded cable 1 are arranged in the conveyance direction. Each of the fixing clamps 130 holds one end of the multicore shielded cable 1 bent by the bender 110A. The device in each of the processing stations St2 through St6 processes the downstream end of the bent multicore shielded cable 1 while the device in the processing station adjacent to the upstream side processes the upstream end of the multicore shielded cable 1. With this configuration, processes on both ends of the multicore shielded cable 1 can be performed simultaneously, and thus, productivity can be enhanced.

In this preferred embodiment, the individual clamps 120a of the shuttles 120 include the upstream group 120R that holds the cores 3 and 4 exposed at the upstream end of the bent multicore shielded cable 1, and the downstream group 120L that is located downstream of the upstream group 120R in the conveyance direction and holds the cores 3 and 4 exposed at the downstream end of the bent multicore shielded cable 1. With this configuration, also in the process of conveying the multicore shielded cable 1 by the shuttle 120, both ends of the U-bent multicore shielded cable 1 can be held. Also in the process of conveying the multicore shielded cable 1 by the shuttle 120, the device in each of the processing stations St7 through St9 processes the downstream end of the multicore shielded cable 1 while the device in the processing station adjacent to the upstream side processes the upstream end of the multicore shielded cable 1.

### [Other Preferred Embodiments of Conveyor]

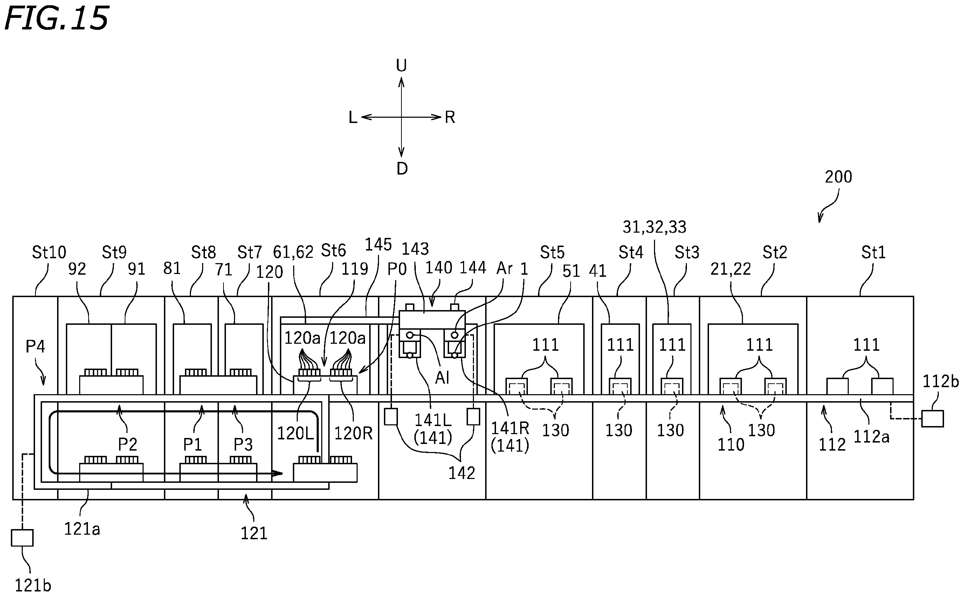

FIG. 15 is a rear view of a conveyor of a multicore shielded cable 1 according to another preferred embodiment. In the following description of the other preferred embodiment, members having the same functions as those of the preferred embodiment described above are denoted by the same reference numerals. As illustrated in FIG. 15, the conveyor of the multicore shielded cable 1 may include a transfer 140 that receives a multicore shielded cable 1 from a first conveyor 110 and delivers the multicore shielded cable 1 to a second conveyor 119. The transfer 140 eliminates direct transfer of the multicore shielded cable 1 from the first conveyor 110 to the second conveyor 119. Accordingly, waiting times of the first conveyor 110 and the second conveyor 119 can be reduced. In this preferred embodiment, the transfer 140 is located between a fifth station St5 and a sixth station St6. The first conveyor 110 conveys the multicore shielded cable 1 to the transfer 140 via a second station St2 to the fifth station St5. The second conveyor 119 takes the multicore shielded cable 1 from the transfer 140 at an intake position P0, and conveys the multicore shielded cable 1 to a tenth station St10.

In this preferred embodiment, individual clamps 120a of the second conveyor 119 hold the multicore shielded cable 1 such that the distance between both ends of the multicore shielded cable 1 is narrower than that in a state that the multicore shielded cable 1 is held by fixing clamps 130 of the first conveyor 110. Accordingly, the length of a processing apparatus 200 in the conveyance direction can be reduced. In addition, the width of each shuttle 120 in the conveyance direction can also be reduced. On the other hand, in the stations St2 through St5 where the first conveyor 110 conveys the multicore shielded cable 1, the distance between both ends of the multicore shielded cable 1 is wide, and thus, arrangement of the devices has flexibility and margin. In view of this, after receiving the multicore shielded cable 1 from the first conveyor 110 and before delivering the multicore shielded cable 1 to the second conveyor 119, the transfer 140 reduces the distance between both ends of the multicore shielded cable 1. In this preferred embodiment, the transfer 140 has the function of reducing the distance between both ends of the multicore shielded cable 1. By this, the device of reducing the distance between both ends of the multicore shielded cable 1 and the transfer 140 are designed as one device.

As illustrated in FIG. 15, the transfer 140 includes a pair of clamps 141 respectively holding both ends of the multicore shielded cable 1, a driver 142 that moves the pair of clamps 141 toward or away from each other, a moving body 143 supporting the clamp 141 and the driver 142, a lifting device 144 that moves the moving body 143 in the top-bottom direction, and a sliding device 145 that moves the moving body 143 in the conveyance direction. In taking the multicore shielded cable 1 from the first conveyor 110, the transfer 140 causes the sliding device 145 to move the moving body 143 to a position above the most downstream conveyance clamp 111 (in the state of being moved downstream). The transfer 140 also causes the lifting device 144 to move the moving body 143 downward to a position such that the position of the clamp 141 in the top-bottom direction is the same as that of the multicore shielded cable 1. In this state, the pair of clamps 141 holds both ends of the multicore shielded cable 1. At this time, the distance between the pair of clamps 141 conforms to the position between both ends of the multicore shielded cable 1 when being held by the first conveyor 110.

When the pair of clamps 141 holds the multicore shielded cable 1, the transfer 140 moves the moving body 143 upward. In addition, the transfer 140 moves the moving body 143 downstream in the conveyance direction to a position above the shuttle 120 at the intake position P0. During this movement, the driver 142 moves the pair of clamps 141 toward each other so that the distance between the pair of clamps 141 conforms to the distance between both ends of the multicore shielded cable 1 when being held by the second conveyor 119. The driver 142 moves the pair of clamps 141 toward or away from each other, causes the distance between the pair of clamps 141 to conform to either the distance between both ends of the multicore shielded cable 1 when being held by the first conveyor 110 or the position between both ends of the multicore shielded cable 1 when being held by the second conveyor 119. Thereafter, the transfer 140 moves downward and delivers the multicore shielded cable 1 to the shuttle 120 at the intake position P0.

In this preferred embodiment, the driver 142 rotates the pair of clamps 141 about the rotation axis located at a position different from the axis of the multicore shielded cable 1 that is held to thereby change the distance between both ends of the multicore shielded cable 1. As illustrated in FIG. 15, in reducing the distance between both ends of the multicore shielded cable 1, the driver 142 rotates the upstream clamp 141R downstream about a rotation axis Ar by 90 degrees. The driver 142 rotates the downstream clamp 141L upstream about a rotation axis Al by 90 degrees. Accordingly, the distance between both ends of the multicore shielded cable 1 is reduced. In this preferred embodiment, not the fixing clamp 130 but the driver 142 rotates both end portions of the multicore shielded cable 1, and the cores 3 and 4 are arranged in the conveyance direction. Accordingly, the core wires 4 can be bent back by the rebender 61 and the drain wire 3 and the core wires 4 can be aligned by the aligner 62.

The transfer 140 is not limited to the configuration described above. For example, the configuration in which the transfer 140 changes the distance between both ends of the multicore shielded cable 1 is not limited to the configuration of rotating the clamps 141. The transfer 140, for example, may cause one or both of the pair of clamps 141 to slide in the conveyance direction to thereby change the distance between both ends of the multicore shielded cable 1. The transfer 140 does not need to lift and lower the multicore shielded cable 1.

In this preferred embodiment, the individual clamps 120a of the second conveyor 119 hold the multicore shielded cable 1 such that the distance between both ends of the multicore shielded cable 1 is narrower than that in a state that the multicore shielded cable 1 is held by the fixing clamps 130 of the first conveyor 110. Alternatively, the individual clamps 120a may hold both ends of the multicore shielded cable 1 with the same distance as that in the state that the multicore shielded cable 1 is held by the fixing clamps 130.

### [Other Preferred Embodiments]

The foregoing description is directed to the preferred embodiments of the present invention. However, the above preferred embodiments are merely examples, and other various preferred embodiments may be made. For example, in the preferred embodiment described above, the position of the drain wire 3 is detected after the semi-stripping process of the sheath 2 is performed, and then, the full-stripping process of the sheath 2 is performed. However, in a case where the strip length of the sheath 2 is short and the possibility of spreading-out of cores is low, for example, the position of the drain wire 3 may be detected after the full-stripping process of the sheath 2 is performed. In a case where the strip length of the sheath 2 is short and a twist of the cores is negligible, for example, untwisting of the cores by stripping of the sheath 2 may not be performed. In a case where the strip length of the sheath 2 is short and the exposed drain wire 3 is short, for example, the correction process of the drain wire 3 may not be performed.

In the preferred embodiments described above, the multicore shielded cable 1 including the drain wire 3 and the core wires 4 is processed. Alternatively, the cable to be processed may be a multicore cable including no drain wire. The multicore cable processing apparatus may be a device that processes a multicore cable including a sheath and a plurality of cores inserted in the sheath. The multicore cable processing apparatus may include a slitter that makes a slit in a sheath along a circumferential direction; and a puller that moves at least one of a distal portion of the sheath and a proximal portion of the sheath in a longitudinal direction of the multicore cable to thereby expose the core wires, the distal portion of the sheath is closer to a distal end of the multicore cable than the slit, and the proximal portion of the sheath is closer to a proximal end of the multicore cable than the slit. The multicore cable processing apparatus may further include a detector that detects a position of a specific core of the core in a circumferential direction of the multicore cable, and a rotator that rotates the multicore cable based on the detected position of the specific core in the circumferential direction to thereby move the specific core to a predetermined position in the circumferential direction. The specific core may be the drain wire but may be another core.

In this multicore cable processing apparatus, the multicore cable is rotated based on the position of the specific core in the circumferential direction detected by the detector, and the position of the specific core can be set at a predetermined position in the circumferential direction. Accordingly, the positions of the plurality of cores are determined. In this manner, the position of each core of the multicore cable can be specified.

The details of each process and the configuration of each device are not particularly limited as long as they do not depart from the technical idea of the present invention. Unless otherwise specified, the preferred embodiments described above do not limit the present invention.

### DESCRIPTION OF REFERENCE CHARACTERS

- 1: multicore shielded cable (multicore cable)
- 2: sheath
- 3: drain wire (core)
- 4: core wire (core)
- 6: heat shrinkable tube
- 7: rubber plug (waterproof rubber plug)
- 8: terminal
- 21: slitter
- 22: sheath semi-stripper (puller)
- 31: drain wire detector (detector)
- 32: sheath stripper (puller)
- 32a: rotating clamp (rotator)
- 33: core wire separator (separator)
- 41: drain wire corrector (corrector)
- 51: insulation processor
- 53: tube attacher (inserter)
- 54: heater
- 61: rebender
- 62: aligner
- 62a: alignment member
- 62b: mover
- 71: rubber plug attacher
- 81: core stripper (stripper)
- 91: right crimper (crimper)
- 92: left crimper (crimper)
- 110: conveyor (first conveyor)
- 110A: bender
- 111: conveyance clamp (holder, moving holder)
- 112: clamp mover (holder mover)
- 119: second conveyor
- 120: shuttle (carrier)
- 120a: individual clamp (holding member)
- 121: shuttle conveyor (carrier mover)
- 120b: loader
- 130: fixing clamp (fixing holder)
- 140: transfer
- 141: clamp (holding member)
- 142: driver
- 150: controller
- 200: processing apparatus
- St2: through St9 stations (processing station)

## Claims

1. A multicore cable processing apparatus that processes a multicore cable including a sheath and a plurality of cores inserted in the sheath, the multicore cable processing apparatus comprising:
a slitter that makes a slit in the sheath along a circumferential direction;
a puller that moves at least one of a distal portion of the sheath and a proximal portion of the sheath in a longitudinal direction of the multicore cable to thereby expose the cores, the distal portion of the sheath being closer to a distal end of the multicore cable than the slit, the proximal portion of the sheath being closer to a proximal end of the multicore cable than the slit;
a detector that detects a position of a specific core of the cores in a circumferential direction of the multicore cable; and
a rotator that rotates the multicore cable based on the detected position of the specific core in the circumferential direction to thereby move the specific core to a predetermined position in the circumferential direction.

2. The multicore cable processing apparatus according to claim 1, wherein
the cores include a drain wire and a plurality of core wires,
the specific core is the drain wire, and
the multicore cable processing apparatus further comprises:
a separator that forces at least one of the drain wire and the core wires to thereby separate the drain wire from the core wires, based on the detected position of the drain wire in the circumferential direction;
an insulation processor that performs an insulation process on the separated drain wire; and
a first conveyor that conveys the multicore cable to the slitter, the puller, the detector, the rotator, the separator, and the insulation processor.

3. The multicore cable processing apparatus according to claim 2, further comprising
a corrector that applies a tensile tension while twisting the separated drain wire in the circumferential direction to thereby correct the drain wire, before the insulation process.

4. The multicore cable processing apparatus according to claim 2 or 3, wherein
the insulation processor includes
an inserter that inserts the separated drain wire in a heat shrinkable tube, and
a heater that heats the heat shrinkable tube in which the drain wire is inserted.

5. The multicore cable processing apparatus according to any one of claims 1 to 4, wherein
the puller pulls out the distal portion of the sheath while rotating at least one of the distal portion of the sheath and the proximal portion of the sheath such that the distal portion of the sheath rotates with respect to the proximal portion of the sheath in the circumferential direction to thereby untwist the cores.

6. The multicore cable processing apparatus according to any one of claims 1 to 5, wherein
the puller
performs semi-striping of pulling out the distal portion of the sheath such that a portion of the cores is exposed and the distal portion of the sheath remains on another portion of the cores, before the detector detects the specific core, and
performs full-stripping of separating the distal portion of the sheath from the cores after the detector detects the specific core.

7. The multicore cable processing apparatus according to any one of claims 1 to 6, further comprising
an aligner that aligns the cores with predetermined intervals, wherein
the aligner includes
an alignment member including a plurality of comb teeth, each adjacent two of the comb teeth forming one of a plurality of gaps corresponding to the cores, and
a mover that moves at least one of the alignment member and the multicore cable and inserts the cores in the gaps of the alignment member individually, and
the gaps are separated from each other such that a distance between the gaps gradually increases toward a front in a movement direction in inserting the cores, the gaps being arranged with the predetermined intervals in a front end in the movement direction.

8. The multicore cable processing apparatus according to any one of claims 1 to 7, further comprising:
a plurality of holding members each capable of holding one of the cores;
a stripper to which tip portions of the cores are loaded and which strips coatings on the loaded tip portions of the cores; and
a loader that moves the holding members individually and loads the cores held by the holding members to the stripper individually.

9. The multicore cable processing apparatus according to claim 8, further comprising
a crimper to which the tip portions of the cores are loaded and which crimps terminals to the loaded tip portions of the cores, wherein
the loader moves the holding members individually and loads the cores which are held by the holding members and from which coatings on the tip portions are stripped to the crimper individually.

10. The multicore cable processing apparatus according to claim 8 or 9, wherein
the cores include a plurality of core wires,
the multicore cable processing apparatus further comprises a rubber plug attacher to which tip portions of the core wires are loaded and which attaches waterproof rubber plugs to the loaded core wires, and
the loader moves the holding members individually and loads the core wires held by the holding members to the rubber plug attacher individually, before coatings on the tip portions of the core wires are stripped.

11. The multicore cable processing apparatus according to any one of claims 1 to 10, further comprising:
a first processing station including at least one of the slitter, the puller, the detector, and the rotator;
a second processing station located adjacent to the first processing station in a predetermined direction and including at least another of the slitter, the puller, the detector, and the rotator; and
a first conveyor that conveys the multicore cable to the slitter, the puller, the detector, and the rotator, wherein
the first conveyor includes
a holder that holds the multicore cable bent such that a first end and a second end of the multicore cable are arranged in the predetermined direction, and
a holder mover that moves the holder in the predetermined direction, and
a device included in the second processing station processes the second end of the multicore cable while a device included in the first processing station processes the first end of the multicore cable.

12. The multicore cable processing apparatus according to any one of claims 1 to 11, further comprising:
a first conveyor that conveys the multicore cable to the slitter, the puller, the detector, and the rotator;
a stripper to which tip portions of the cores are loaded and which strips coatings on the tip portions of the loaded cores;
a crimper to which the tip portions of the cores are loaded and which crimps terminals to the tip portions of the cores from which the coatings are stripped by the stripper; and
a second conveyor that conveys the multicore cable to the stripper and the crimper, wherein
the second conveyor includes
a carrier including a plurality of holding members each capable of holding one of the cores, and
a carrier mover that moves the carrier among an intake position at which the multicore cable is taken, a first facing position facing the stripper, a second facing position facing the crimper, and a release position at which the multicore cable to which the terminals are crimped is released.

13. The multicore cable processing apparatus according to claim 12, wherein
the second conveyor comprises a plurality of the carriers, and
the carrier mover performs cyclic movement of the carriers.

14. The multicore cable processing apparatus according to claim 13, wherein
the cyclic movement of the carriers includes lateral movement among the intake position, the first facing position, and the second facing position, and vertical movement among a vertical position where the intake position, the first facing position, and the second facing position belong to and another vertical position below the intake position, the first facing position, and the second facing position, and
the holding members of the carriers hold the cores when the carriers move from a position below the intake position to the intake position.

15. The multicore cable processing apparatus according to any one of claims 12 to 14, further comprising:
a plurality of processing stations each including at least one of the slitter, the puller, the detector, and the rotator, wherein
the first conveyor includes
a plurality of fixing holders each facing one of the processing stations and operable to hold the multicore cable, and
one or more moving holders each operable to hold the multicore cable and to reciprocate between adjacent two of the fixing holders.

16. The multicore cable processing apparatus according to claim 15, further comprising
a transfer that receives the multicore cable from the first conveyor and delivers the multicore cable to the second conveyor.

17. The multicore cable processing apparatus according to claim 15 or 16, wherein
the processing stations are arranged in a conveyance direction of conveyance of the multicore cable by the moving holders,
the multicore cable processing apparatus further comprises a bender located upstream of the processing stations in the conveyance direction and operable to bend the multicore cable in a substantially U shape such that both ends of the multicore cable are arranged in the conveyance direction, wherein
each of the fixing holders holds one end of the multicore cable bent by the bender, and
while a device included in a first processing station of the processing stations processes an upstream end portion of the multicore cable, a device included in a second processing station of the processing stations processes a downstream end portion of the bent multicore cable, the first processing station being adjacent to an upstream side of the second processing station.

18. The multicore cable processing apparatus according to claim 17, wherein
the holding members of the carrier include
an upstream group operable to hold the cores exposed in the upstream end portion of the bent multicore cable, and
a downstream group located downstream of the upstream group in the conveyance direction and operable to hold the cores exposed in the downstream end portion of the bent multicore cable.

19. The multicore cable processing apparatus according to claim 18, wherein
the holding members hold the multicore cable such that a distance between both ends of the multicore cable is narrower than a distance between both ends of the multicore cable in a state of being held by the fixing holders.

20. The multicore cable processing apparatus according to claim 19, further comprising
a transfer that receives the multicore cable from the first conveyor and delivers the multicore cable to the second conveyor, wherein
the transfer includes
a pair of holding members operable to individually hold both ends of the multicore cable, and
a driver that moves the pair of holding members toward or away from each other, and causes a distance between the pair of holding members to conform to either a distance between both ends of the multicore cable when being held by the first conveyor or a distance between both ends of the multicore cable when being held by the second conveyor.
